# EUROPEAN PATENT SPECIFICATION

(11) **EP 1 633 102 B1**
(45) Date of publication and mention of the grant of the patent: **02.11.2006**
(21) Application number: 04255278.6
(22) Date of filing: 01.09.2004
(51) Int. Cl.: H04L 29/06

(54) **Split channel authenticity queries in multi-party dialog**
Verteilkanalauthentifikationsabfragen im Mehrparteiendialog
Interrogation d'authentification par division de canaux dans un dialogue entre plusieurs parties

(43) Date of publication of application: 08.03.2006
(73) Proprietor: Research In Motion Limited, Waterloo, Ontario N2L 3W8 (CA)
(72) Inventor: Yach, David, P., Ontario, N2K 2N1 (CA); Little, Herbert, A., Ontario, N2T 2V8 (CA); Klassen, Gerhard, D., Ontario, N2T 1H7 (CA)
(74) Representative: Hibbert, Juliet Jane Grace

(56) References cited:
- EP-A- 1 422 960
- US-A- 5 668 876
- US-A- 5 774 525
- US-A1- 2002 004 831

## Description

### BACKGROUND OF THF INVENTION

### Field of the Invention

This invention relates generally to the field of substantially real time multi-party dialogs between communication devices/participants (e.g., sometimes referred to as Instant Messaging (IM) and/or Quick Messaging (QM). More particularly, this invention deals with method, apparatus and computer program storage media useful for checking the authenticity of proposed future or current participants in a substantially real time multi-party dialog between communication devices/participants.

### Related Art

Systems which permit substantially real time dialog between plural mobile communication units/participants have already become common. Some of these systems have been referred to as instant messaging (IM) which started out in LANline environments but which have now evolved to a wireless environment using mobile communication devices. The number of available mobile communication devices is already very large (e.g., cell phones, smart phones, PDAs, pagers, phone-enabled laptop computers and a range of other devices). To the extent that such earlier systems rely upon communication of numerous housekeeping messages (e.g., status of participants, bubby lists, buddy statuses, etc.), such arrangements can become cumbersome in a wireless environment with relatively limited bandwidths. Accordingly, some more recent developments involving peer-to-peer substantially real time dialogs between multi-parties are being implemented.

Some prior authentication schemes are exemplified by prior art such as: US 2002/0004831 A1 (Woodhill); EP 1,422,960 A1 (Miller); US 5,774,525 (Kanevsky); and US 5,668,876 (Falk). For example, Woodhill describes an authentication or authorization system to facilitate electronic transactions which uses simultaneous or substantially simultaneous communications on two different networks to verify a user's identity.

### Brief summary of the Invention

This invention provides an enhanced authenticity check of a proposed future or current participant in a multi-party dialog between mobile communication devices/participants. An authenticity challenge query is generated and split into plural portions, none of such portions individually containing sufficient information to fully define the challenge query. These separated portions are separately communicated to the proposed future or current participant whose authenticity is to be checked over at least two separate communication channels. Thus the probability that a challenge response is authentic is enhanced.

In a preferred exemplary embodiment, the authenticity challenge query may include the formation of a logical combination between first and second data strings to produce a resultant third data string. For example, the first data string may comprise a generated mask string while the second string may comprise a question that can be easily answered by the challenged participant if the participant is authentic. For example, the logical combination of these first and second data strings may include performing an exclusive-OR between the two data strings.

The first data string and the third data string (i.e., the one which results from a logical combination of the first two data strings) may then be separately sent over respective different communication channels which are each believed to be uniquely directed to the authentic participant. Upon receipt of these different portions by the challenged participant, the authenticity challenge query may be reconstructed and then answered by sending an appropriate query response back to the first participant (i.e., the participant issuing the challenge). For example, an inverse logical combination of the two received strings may be performed. In the case of a relatively simple exemplary embodiment, a second exclusive-OR performed between the received first and third data strings would produce the missing second data string (i.e., a question that could be easily answered by the challenged participant if that participant is authentic).

When the participant issuing the challenge receives a response, it can then be checked to see whether the response is the correct expected response to the authentication query. If so, then the probability that the challenged participant is authentic has been enhanced because the query (and therefore the appropriate response) could only have been determined if the challenged participant correctly received the different portions of the challenge over at least two separate communication channels.

A peer-to-peer routing system with which this invention is particularly useful is described in commonly assigned application No. 60/503,367 filed September 16, 2003 entitled "QUICK MESSAGING USING PEER-TO-PEER ROUTING" and naming as inventors Mihal Lazaridis, Gerhard D. Klassen, Christopher R. Wormald and Sherryl Lea Lorraine Scott where the service has been referred to as Quick Messaging (QM). Such earlier application recognizes and at least partially addresses a major security problem in such substantially real time multi-party dialog systems, namely, the problem of authenticating the identity of a proposed future and/or current participant in such a multi-party dialog.

The invention may be embodied in hardware, software or a combination of hardware and software. The invention also provides a method for enhanced authenticity checking of a proposed future or current participant in a multi-party dialog between mobile communication devices/participants.

### BRIEF DESCRIPTION OF THE DRAWINGS

These and other objects and advantages of this invention will be more completely appreciated and understood by careful study of the following detailed description of at least one exemplary embodiment of this invention in conjunction with the following drawings, of which:
FIG. 1 is an overall system wide schematic view of an exemplary wireless e-mail communication system incorporating a mobile wireless communication device having split channel authenticity challenge capability in accordance with one exemplary embodiment of this invention;

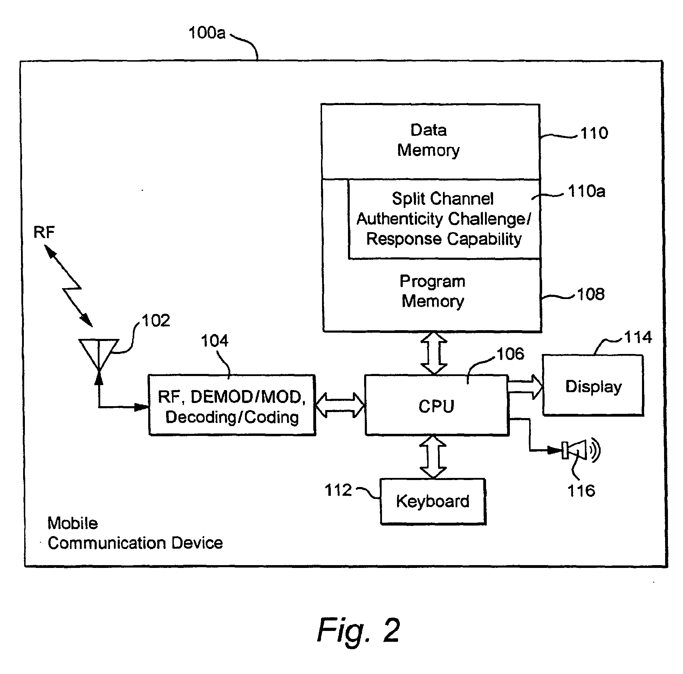

FIG. 2 is an abbreviated schematic diagram of hardware included within an exemplary mobile wireless communication device of FIG. 1;
FIG. 3 is an abbreviated schematic flowchart of computer software (i.e., program logic) that may be utilized in the device of FIG. 2 for a first user to initiate an authenticity challenge to a second user (and to evaluate a response thereto when received); and
FIG. 4 is an exemplary abbreviated schematic flowchart of computer software (i.e., program logic) that may be utilized in the device of FIG. 2 to permit a user to respond to an authenticity challenge of the kind generated from the challenging participant in accordance with FIG. 3.

### DETAILED DESCRIPTION OF THE INVENTION

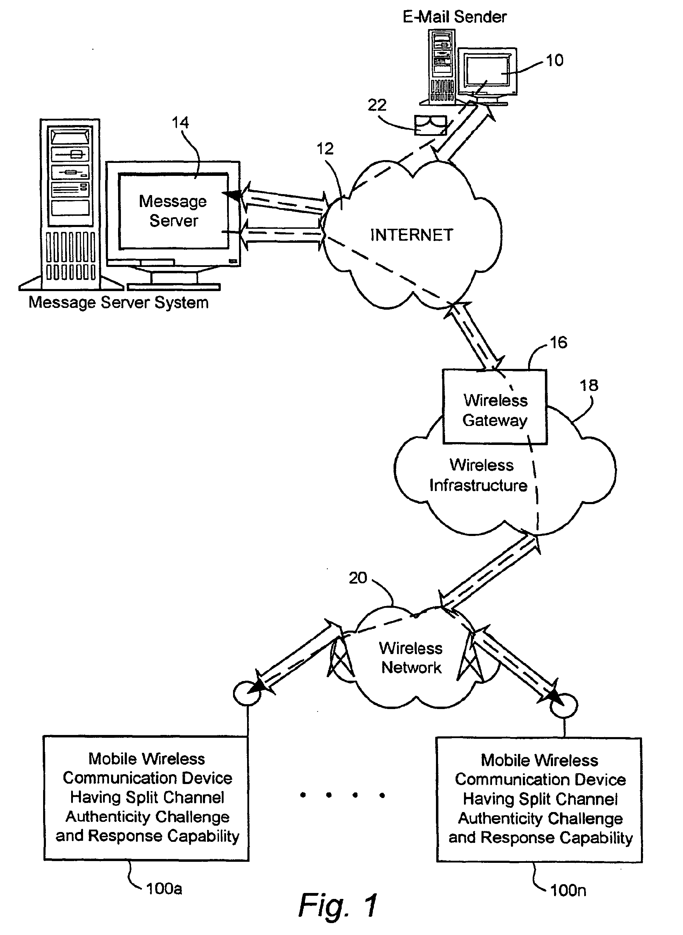

FIG. 1 is an overview of an exemplary communication system in which wireless communication devices **100a-100n** may be used in accordance with this invention. One skilled in the art will appreciate that there may be hundreds of different system topologies. There may also be many message senders and recipients. The simple exemplary system shown in FIG. 1 is for illustrative purposes only, and shows perhaps the currently most prevalent Internet e-mail environment.

FIG. 1 shows an e-mail sender **10,** the Internet **12,** a message server system **14,** a wireless gateway **16**, wireless infrastructure **18**, a wireless network **20** and mobile communication devices **100a-100n.**

An e-mail sender 10 may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online^{™} (AOL). Those skilled in the art will appreciate that the systems shown in FIG. 1 may instead be connected to a wide area network (WAN) other than the Internet, although e-mail transfers are commonly accomplished through Internet-connected arrangements as shown in FIG. 1.

The message server **14** may be implemented, for example, on a network computer within the firewall of a corporation, a computer within an ISP or ASP system or the like, and acts as the main interface for e-mail exchange over the Internet **12.** Although other messaging systems might not require a message server system **14,** a mobile device **100a-100n** configured for receiving and possibly sending e-mail will normally be associated with an account on a message server. Perhaps the two most common message servers are Microsoft Exchange^{™} and Lotus Domino^{™}. these products are often used in conjunction with Internet mail routers that route and deliver mail. These intermediate components are not shown in FIG. 1, as they do not directly play a role in the invention described below. Message servers such as server **14** typically extend beyond just e-mail sending and receiving; they also include dynamic database storage engines that have predefined database formats for data like calendars, to-do lists, task lists, e-mail and documentation.

The wireless gateway 16 and infrastructure **18** provide a link between the Internet **12** and wireless network **20**. The wireless infrastructure **18** determines the most likely network for locating a given user and tracks the users as they roam between countries or networks. A message is then delivered to a mobile device **100a-100n** via wireless transmission, typically at a radio frequency (RF), from a base station in the wireless network **20** to the appropriate mobile device **100a-100n.** The particular network **20** may be virtually any wireless network over which messages may be exchanged with a mobile communication device.

As shown in FIG. 1, a composed e-mail message **22** is sent by the e-mail sender 10, located somewhere on the Internet **12.** This message **22** typically uses traditional Simple Mail Transfer Protocol (SMTP), RFC **822** headers and Multipurpose Internet Mail Extension (MIME) body parts to define the format of the mail message. These techniques are all well known to those skilled in the art. The message **22** arrives at the message server **14** and is normally stored in a message store. Most known messaging systems support a so-called "pull" message access scheme, wherein a mobile device **100a-100n** must request that stored messages be forwarded by the message server to the mobile device **100.** Some systems provide for automatic routing of such messages which are addressed using a specific e-mail address associated with a mobile device **100a-100n.** In a preferred embodiment, messages addressed to a message server account associated with a host system such as a home computer or office computer which belongs to the user of a mobile device **100a-100n** are redirected from the message server **14** to a mobile device **100a-100n** as they are received.

Regardless of the specific mechanism controlling forwarding of messages to mobile devices **100a-100n,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, and TDMA systems.

A system of the type depicted in FIG. 1 may also permit direct peer-to-peer communication between mobile communication devices **100a...100n** (e.g., using unique device PIN data for direct addressing). Such direct communication (e.g., sometimes referred to as "over the PIN") thus bypass IT administrator controls and permit substantially real time peer-to-peer dialogs to occur (e.g., Quick Messaging or "QM").

A mobile communication device **100a-100n** will also typically include a main control CPU **106** which operates under control of a stored program in program memory **108** (and which has access to data memory **110).** CPU **106** also communicates with a conventional keyboard **112,** display **114** (e.g., an LCD) and audio transducer or speaker **116.** A portion of program memory **110a** is available for storing program logic providing split channel authenticity checking of IM (Instant Messaging) or QM (Quick Messaging) or other substantially real time dialog participants as described below.

The above referenced commonly assigned copending application recognizes that, when requested, a person sending a QM invitation can transmit the invitation over multiple communication paths. Each communication path effectively confirms a different address identity for the sender, thus helping to confirm authenticity of the sender's request. For example, if a QM request is sent, it could be sent over both e-mail and SMS (Short Message Service Protocol which is used throughout North America and especially in Europe). In this earlier proposal, when sending requests over two data paths, once the receiver receives both requests, either request could be opened to confirm the invitation and authenticity of the sender. It will be understood that there are many possible separate communication channels that may be used. For example, currently there are available e-mail SMS, MMS, EMS, IMS and the like. Any of these and other existing and/or future communications channels may be used if available and desired.

The earlier commonly assigned copending application also contemplated a QM requester making a voice call so that a voice authenticity check could be performed by the recipient of the invitation (which could then be sent and/or accepted in machine readable form over the calling telephone connection using an exchange of DTMF tones or the like between the two proposed participants).

Since some "real time" dialogs may continue to exist for very long periods of time (e.g., days, weeks, months, perhaps even years), it also important for participants to be able to challenge each other at any appropriate time to insure that the other participant(s) is (are) truly authentic. In addition, sending the same invitation over multiple channels, while perhaps a useful authenticity-checking routine for initiating a dialog from the requesting party's view point, it may not be sufficient to insure authenticity to the recipient of such request (i.e., invitation). That is, the recipient of the invitation may want to issue an independent authenticity challenge back to the party requesting a dialog.

In another context, when one registers for a service, such as going to a particular webpage and registering to receive desired news or other information, often an e-mail is sent to the requester containing a password to allow access the service. Unfortunately, this e-mail becomes a single point of attack for anyone interested in using this service and later pretending to be the original party. Here we provide a method to mitigate the risk by splitting up the "login" information into different channels. This is especially useful in the Quick Messaging case. In addition, this method allows one to decide if two pieces of information, such as a PIN and e-mail address, should be associated with each other.

In particular, in the exemplary embodiment, authentication information is split into two parts. These two parts are sent to the user over different channels, such as HTTP and E-mail or SMS (Short Message Service), MMS (Multi-Media Messaging), PIN, etc. Hence, this may be analogous in some respects to tearing an authenticating ticket in half.

Once the user has all of the information parts, he/she can reconstruct the authentication query to validate himself/herself to the service.

For example, once the user signs up for a service, he/she could be sent half of the information via HTTP (since he/she is already currently connected) while the other half could be sent via e-mail. The reconstruction could also be done automatically so it would be seamless to the user.

Another place where this could be used is in Quick Messaging. When someone asks to QM you, the request may be sent directly peer-to-peer using a known PIN. To better make sure that the person is authentic (i.e., that the person making the request is really who he/she says), the receiving application could create an authentication challenge and send half back directly via a known (and to some extent trusted) PIN and the other half to the claimed source person's known (and to some extent trusted) e-mail address. If the user responds correctly, this would imply that he/she has had access to both the PIN and the e-mail address believed to be authentically associated with that person. This gives a stronger level of authentication than only one channel (e.g., the PIN) alone.

One benefit of this method is that it allows one to decide whether to form an association between two things - in this case, for example, an e-mail address and a PIN. Since the authentication is split over the e-mail and PIN, then if the user can put it back together properly, he/she must have access to both the e-mail and PIN.

Of course this does not get rid of risk entirely. All it does is raise the bar. If someone wants to get a person's authentication information, then they have to monitor multiple channels (such as e-mail and HTTP). This is much harder than watching just one channel.

It should also be noted this generalizes immediately to splitting the authentication information into n parts, i.e., using n different respectively corresponding channels to send the n authentication information parts.

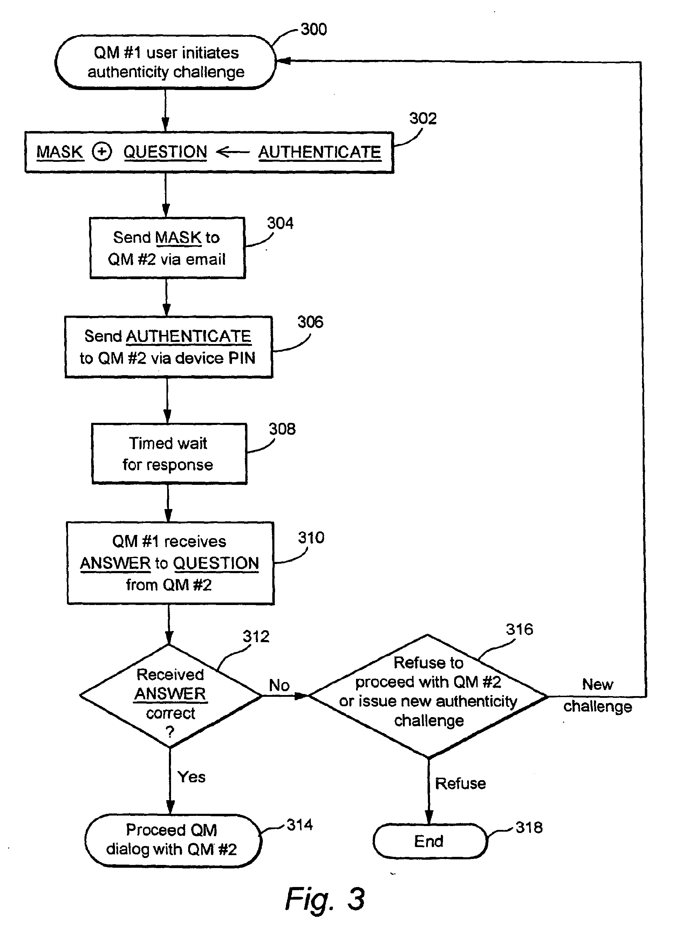

If a QM user wishes to initiate an authenticity challenge, then a suitable program logic as shown in FIG. 3 may be entered at **300**. Here, a QUESTION that should be easy for a challenged authentic participant to answer is exclusively ORed with another data string bearing the label MASK as depicted at **302.** The result is stored and labeled as a third data string labeled AUTHENTICATE.

A first of these three data strings (e.g., MASK) may be then sent to a challenged possible future or current participant in a dialog via one communication channel that is believed to be associated uniquely with the authentic party (e.g., e-mail). At **306,** another of the three data strings (e.g., the resultant AUTHENTICATE data string) is sent to the challenged user via a second separately authentic communication channel (e.g., via a device PIN connection). After a possible wait for a response at **308,** the responsive answer is received at **310** by the participant issuing the challenge. This is tested for correctness at **312.** If it tests correctly, then the dialog may be continued or initiated with the newly authenticated participant at **314.** However, if the received answer is not correct (or is not received back within a desired maximum wait period), then a decision may be made at **316** whether to permit a new challenge to be issued so as to re-test that same (or perhaps another different) participant in an ongoing dialog (or a new dialog that is proposed). If an additional authenticity challenge is permitted, then the logic returns back to initiate a new authenticity challenge at **300.** Otherwise, the challenged participant is refused further (or initial) participation and the process is ended at **318.**

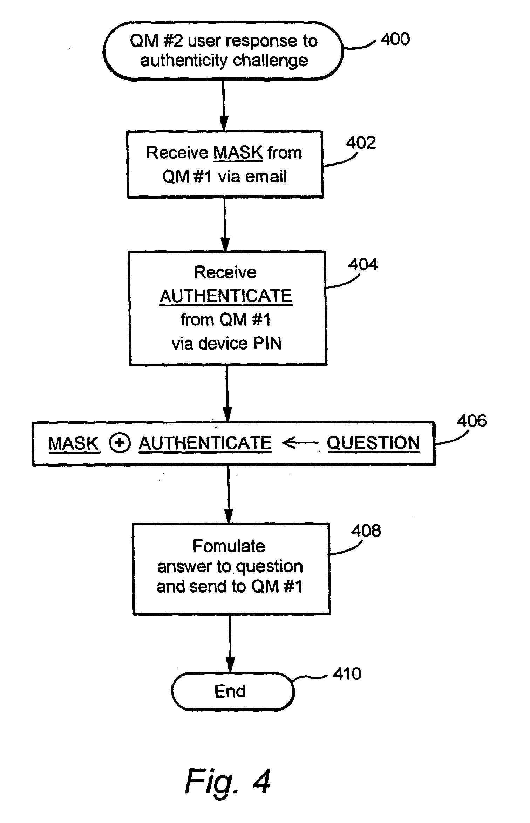

FIG. 4 depicts exemplary program logic for a challenged participant to respond to an authenticity challenge and is entered at **400.** As depicted at **402** and **404,** the separated parts of the authenticity challenge (e.g., the data string MASK and the data string AUTHENTICATE) are received via respectively different authentic communication channels (e.g., via e-mail and via a device PIN channel). At **406,** a logical combination of the received strings (e.g., another exclusive-OR of the received MASK and AUTHENTICATE strings will provide the QUESTION string). This permits the challenged participant to formulate an answer to the QUESTION and to send it back to the challenging participant at **408** before the routine is exited at **410.**

Other suitable techniques are also available for splitting the authentication query into plural parts, no one of which is sufficient by itself to fully define the query. For example, orthogonal hashes may be made to create plural parts which are all required to reconstruct the query. Careful construction of the query might even make it sufficient to divide the query into n strings, each string comprising successively displaced nth digits (e.g., Part 1 = D₁Dₙ₊₁D₂ₙ₊₁D₃ₙ₊₁... Part 2 = D₂Dₙ₊₂D₂ₙ₊₂D₃ₙ₊₂... Part 3 = D₃Dₙ₊₃D₂ₙ₊₃D₃ₙ₊₃...etc.). Other possibilities will be apparent to those in the art.

While the invention has been described in connection with what is presently considered to be the most practical and preferred exemplary embodiments, it is to be understood that the invention is not limited to the disclosed embodiments but, on the contrary, covers all variations, modifications and equivalent arrangements included within the scope of the appended claims.

## Claims

1. A method for checking the authenticity of a proposed future or current participant in a multi-party dialog, said method comprising:
generating an authenticity challenge query from a first participant to a second dialog participant;
splitting said authenticity challenge query into at least two portions (302), wherein none of said portions individually contains sufficient information to fully define the challenge query; and
separately sending said portions to said second dialog participant over at least two different communication channels (304, 306).

2. A method as in claim 1 wherein said multi-party dialog is conducted in real time over wireless communication channels using at least one mobile wireless communication device.

3. A method as in claim 1 or claim 2 wherein:
generating said authenticity challenge query includes a logical combination of first and second data strings to produce a resultant third data string, and
said splitting and separately sending steps include said first and third data strings being sent to said second dialog participant over respectively different communication channels.

4. A method as in claim 3 wherein said logical combination comprises an exclusive-OR of said first data string with said second data string.

5. A method as in preceding claim further comprising:
receipt by said second participant of said plural portions,
reconstruction of said authenticity challenge query from said received plural portions, and
sending of a response to said query by said second participant to said first participant.

6. A method as in claim 5 wherein:
reconstruction of said authenticity challenge query includes a logical combination of said first and third data strings.

7. A method as in claim 6 wherein:
the logical combination used to generate said authenticity challenge query comprises an exclusive-OR of said first data string with said second data stream.

8. A method as in claim 7 wherein:
the logical combination used in reconstruction of said authenticity challenge query comprises an exclusive-OR of said received first data string with said received third data string.

9. A method as in any of claims 5 to 8 further comprising:
receipt by said first participant of the query response sent by the second participant; and
checking whether said received response is correct.

10. A system for checking the authenticity of a proposed future or current participant in a multi-party dialog, said system comprising:
means for generating an authenticity challenge query from a first participant dialog to a second dialog participant;
means for splitting said authenticity challenge query into at least two portions (302), wherein none of said portions individually contains sufficient information to fully define the challenge query; and
means for separately sending said portions to said second dialog participant over at least two different communication channels (304, 306).

11. A system as in claim 10 wherein said multi-party dialog is conducted in real time over wireless communication channels using at least one mobile wireless communication device.

12. A system as in claim 10 or claim 11 wherein:
means for generating said authenticity challenge query includes means for forming a logical combination of first and second data strings to produce a resultant third data string, and
said means for splitting and separately sending include means for sending said first and third data strings to said second dialog participant over respectively different communication channels.

13. A system as in claim 12 wherein said means for forming a logical combination comprises means for performing an exclusive-OR of said first data string with said second data strings.

14. A system as in any of claims 10 to 13 further comprising:
means at said second participant location for receiving said plural portions, means for reconstruction of said authenticity challenge query from said received plural portions, and
means for sending of a response to said query by said second participant to said first participant.

15. A system as in claim 14 wherein:
means for generating said authenticity challenge query includes means for forming a logical combination of first and second data strings to produce a resultant third data string, and
said means for splitting and separately sending include means for sending said first and third data strings to said second dialog participant over respectively different communication channels.

16. A system as in claim 15 wherein:
said means for reconstruction of said authenticity challenge query includes means for forming a logical combination of said received first and third data strings.

17. A system as in claim 16 wherein:
said means for forming a logical combination used to generate said authenticity challenge query comprises means for performing an exclusive-OR of said first data string with said second data stream.

18. A system as in claim 17 wherein:
said means for forming a logical combination used in reconstruction of said authenticity challenge query comprises means for forming an exclusive-OR of said received first data string with said received third data string.

19. A system as in any of claims 14 to 18 further comprising:
means at said first participant location for receiving the query response sent by the second participant; and
means for checking whether said received response is correct.

20. A computer program storage medium holding a computer program, said computer program being configured to execute the method of any of claims 1 to 9.

## Patentansprüche

1. Verfahren zum Prüfen der Autentizität eines vorgeschlagenen zukünftigen oder derzeitigen Teilnehmers in einem Dialog mit mehreren Teilnehmern, wobei das Verfahren aufweist:
Erzeugen einer Autentizitäts-Challengeabfrage von einem ersten Teilnehmer zu einem zweiten Dialogteilnehmer;
Aufteilen der Autentizitäts-Challengeabfrage in zumindest zwei Teile (302), wobei keiner der Teile alleine genügend Information enthält, um die Challengeabfrage vollständig zu bestimmen; und
getrenntes Senden der Teile zu dem zweiten Dialogteilnehmer über zumindest zwei unterschiedliche Kommunikationskanäle (304, 306).

2. Verfahren nach Anspruch 1, wobei der Dialog mit mehreren Teilnehmern in Echtzeit über kabellose Kommunikationskanäle durchgeführt wird, wobei zumindest eine mobile kabellose Kommunikationseinrichtung verwendet wird.

3. Verfahren nach Anspruch 1 oder 2, wobei:
das Erzeugen der Autentizitäts-Challengeabfrage eine logische Kombination von ersten und zweiten Daten-Zeichenfolgen enthält, um eine resultierende dritte Daten-Zeichenfolge zu erzeugen, und
die Schritte des Aufteilens und des getrennten Sendens es beinhalten, dass besagte erste und dritte Daten-Zeichenfolgen zu dem zweiten Dialogteilnehmer über entsprechende verschiedene Kommunikationskanäle gesendet werden.

4. Verfahren nach Anspruch 3, wobei die logische Kombination eine exklusive ODER-Verknüpfung von der ersten Daten-Zeichenfolge mit der zweiten Daten-Zeichenfolge aufweist.

5. Verfahren nach vorhergehendem Anspruch, welches weiters aufweist:
Empfang der mehreren Teile durch den zweiten Teilnehmer,
Wiederherstellung der Autentizitäts-Challengeabfrage von den empfangenen mehreren Teilen, und ,
Senden einer Antwort auf besagte Abfrage von dem zweiten Teilnehmer zu dem ersten Teilnehmer.

6. Verfahren nach Anspruch 5, wobei:
die Wiederherstellung der Autentizitäts-Challengeabfrage eine logische Kombination von den ersten und den dritten Daten-Zeichenfolgen enthält.

7. Verfahren nach Anspruch 6, wobei:
die logische Kombination, die verwendet wird, um die Autentizitäts-Challengeabfrage zu erzeugen eine exklusive ODER-Verknüpfung von der ersten Daten-Zeichenfolge mit der zweiten Daten-Zeichenfolge aufweist.

8. Verfahren nach Anspruch 7, wobei:
die logische Kombination, die bei der Wiederherstellung der Autentizitäts-Challengeabfrage verwendet wird, eine exklusive ODER-Verknüpfung von der empfangenen ersten Daten-Zeichenfolge mit der empfangenen dritten Daten-Zeichenfolge aufweist.

9. Verfahren nach einem der Ansprüche 5 bis 8, welches weiters aufweist:
Empfangen der von dem zweiten Teilnehmer gesendeten Abfrageantwort durch den ersten Teilnehmer; und
Prüfen, ob die empfangen Antwort richtig ist.

10. System zum Prüfen der Autentizität eines vorgeschlagenen zukünftigen oder derzeitigen Teilnehmers in einem Dialog mit mehreren Teilnehmern, wobei das System aufweist:
Mittel zum Erzeugen einer Autentizitäts-Challengeabfrage von einem ersten Dialogteilnehmer zu einem zweiten Dialogteilnehmer;
Mittel zum Aufteilen der Autentizitäts-Challengeabfrage in zumindest zwei Teile (302), wobei keiner der Teile alleine genügend Information enthält, um die Challengeabfrage vollständig zu bestimmen; und
Mittel, um die Teile zu dem zweiten Dialogteilnehmer über zumindest zwei unterschiedliche Kommunikationskanäle getrennt zu Senden (304, 306).

11. System nach Anspruch 10, wobei der Dialog mit mehreren Teilnehmern in Echtzeit über kabellose Kommunikationskanäle durchgeführt wird, wobei zumindest eine mobile kabellose Kommunikationseinrichtung verwendet wird.

12. System nach Anspruch 10 oder 11, wobei:
die Mittel zum Erzeugen der Autentizitäts-Challengeabfrage Mittel zum Bilden einer logische Kombination von ersten und zweiten Daten-Zeichenfolgen enthalten, um eine resultierende dritte Daten-Zeichenfolge zu erzeugen, und
die Mittel zum Aufteilen und getrennt Senden Mittel beinhalten, um die ersten und dritten Daten-Zeichenfolgen zu dem zweiten Dialogteilnehmer über entsprechende verschiedene Kommunikationskanäle zu senden.

13. System nach Anspruch 12, wobei die Mittel zum Bilden einer logischen Kombination Mittel aufweisen, um eine exklusive ODER-Verknüpfung von der ersten Daten-Zeichenfolge mit den zweiten Daten-Zeichenfolgen durchzuführen.

14. System nach einem der Ansprüche 10 bis 13, welches weiters aufweist:
Mittel an der Örtlichkeit des zweiten Teilnehmers zum Empfangen der mehreren Teile,
Mittel zum Wiederherstellen der Autentizitäts-Challengeabfrage von den empfangenen mehreren Teilen, und
Mittel zum Senden einer Antwort auf besagte Abfrage von dem zweiten Teilnehmer zu dem ersten Teilnehmer.

15. System nach Anspruch 14, wobei:
die Mittel zum Erzeugen der Autentizitäts-Challengeabfrage Mittel enthalten, um eine logische Kombination von ersten und zweiten Daten-Zeichenfolgen zu bilden, um eine resultierende dritte Daten-Zeichenfolge zu erzeugen, und
die Mittel zum Aufteilen und getrennt Senden Mittel beinhalten, um die ersten und dritten Daten-Zeichenfolgen zu dem zweiten Dialogteilnehmer über entsprechende verschiedene Kommunikationskanäle zu senden.

16. System nach Anspruch 15, wobei:
die Mittel zur Wiederherstellung der Autentizitäts-Challengeabfrage Mittel enthält, um eine logische Kombination von den empfangenen ersten und dritten Daten-Zeichenfolgen enthält.

17. System nach Anspruch 16, wobei:
die Mittel zum Bilden einer logischen Kombination, die verwendet wird, um die Autentizitäts-Challengeabfrage zu erzeugen, Mittel aufweist, um eine exklusive ODER-Verknüpfung von der ersten Daten-Zeichenfolge mit der zweiten Daten-Zeichenfolge durchzuführen.

18. System nach Anspruch 17, wobei:
die Mittel zum Bilden der logische Kombination, die bei der Wiederherstellung der Autentizitäts-Challengeabfrage verwendet werden, Mittel aufweisen, um eine exklusive ODER-Verknüpfung von der empfangenen ersten Daten-Zeichenfolge mit der empfangenen dritten Daten-Zeichenfolge zu bilden.

19. System nach einem der Ansprüche 14 bis 18, welches weiters aufweist:
Mittel an der Örtlichkeit des ersten Teilnehmers, um die von dem zweiten Teilnehmer gesendete Abfrageantwort zu empfangen; und
Mittel zum Prüfen, ob die empfangen Antwort richtig ist.

20. Computerprogramm-Speichermedium, welches ein Computerprogramm enthält, wobei das Computerprogramm konfiguriert ist, um das Verfahren nach einem der Ansprüche 1 bis 9 auszuführen.

## Revendications

1. Procédé permettant de vérifier l'authenticité d'un participant futur ou actuel proposé à un dialogue à plusieurs, ledit procédé comprenant :
la génération d'une demande de vérification d'authenticité d'un premier participant à un deuxième participant au dialogue ;
la séparation de ladite demande de vérification d'authenticité en au moins deux parties (302), aucune desdites parties ne contenant individuellement suffisamment d'informations pour définir pleinement la demande de vérification, et
l'envoi séparé desdites parties audit deuxième participant au dialogue par au moins deux canaux de communication (304, 306) différents.

2. Procédé suivant la revendication 1 dans lequel ledit dialogue à plusieurs est mené en temps réel par des canaux de communication sans fil en utilisant au moins un dispositif de communication sans fil mobile.

3. Procédé suivant la revendication 1 ou 2 dans lequel :
la génération de ladite demande de vérification d'authenticité inclut une combinaison logique de première et deuxième chaînes de données pour produire une troisième chaîne de données résultante, et
lesdites étapes de séparation et d'envoi séparé incluent l'envoi desdites première et troisième chaînes de données audit deuxième participant au dialogue par des canaux de communication différents les uns des autres.

4. Procédé suivant la revendication 3 dans lequel ladite combinaison logique comprend l'exécution d'un OU exclusif de ladite première chaîne de données avec ladite deuxième chaîne de données.

5. Procédé suivant la revendication précédente comprenant en outre :
la réception par ledit deuxième participant desdites plusieurs parties ;
la reconstruction de ladite demande de vérification d'authenticité à partir desdites plusieurs parties reçues, et
l'envoi d'une réponse à ladite demande par ledit deuxième participant audit premier participant.

6. Procédé suivant la revendication 5 dans lequel :
la reconstruction de ladite demande de vérification d'authenticité inclut une combinaison logique desdites première et troisième chaînes de données.

7. Procédé suivant la revendication 6 dans lequel :
la combinaison logique utilisée pour générer ladite demande de vérification d'authenticité comprend l'exécution d'un OU exclusif de ladite première chaîne de données avec ledit deuxième flux de données.

8. Procédé suivant la revendication 7 dans lequel :
la combinaison logique utilisée pour reconstruire ladite demande de vérification d'authenticité comprend l'exécution d'un OU exclusif de ladite première chaîne de données reçue avec ladite troisième chaîne de données reçue.

9. Procédé suivant l'une quelconque des revendications 5 à 8 comprenant en outre :
la réception par ledit premier participant de la réponse à la demande envoyée par le deuxième participant, et
la vérification que ladite réponse reçue est correcte.

10. Système permettant de vérifier l'authenticité d'un participant futur ou actuel proposé à un dialogue à plusieurs, ledit système comprenant :
un moyen pour générer une demande de vérification d'authenticité d'un premier participant au dialogue à un deuxième participant au dialogue ;
un moyen pour séparer ladite demande de vérification d'authenticité en au moins deux parties (302), aucune desdites parties ne contenant individuellement suffisamment d'informations pour définir pleinement la demande de vérification, et
un moyen pour envoyer séparément lesdites parties audit deuxième participant au dialogue par au moins deux canaux de communication (304, 306) différents.

11. Système suivant la revendication 10 dans lequel ledit dialogue à plusieurs est mené en temps réel par des canaux de communication sans fil en utilisant au moins un dispositif de communication sans fil mobile.

12. Système suivant la revendication 10 ou 11 dans lequel :
le moyen pour générer ladite demande de vérification d'authenticité inclut un moyen pour former une combinaison logique de première et deuxième chaînes de données pour produire une troisième chaîne de données résultante, et
lesdits moyens pour séparer et envoyer séparément incluent un moyen pour envoyer lesdites première et troisième chaînes de données audit deuxième participant au dialogue par des canaux de communication différents les uns des autres.

13. Système suivant la revendication 12 dans lequel ledit moyen pour former une combinaison logique comprend un moyen pour exécuter un OU exclusif de ladite première chaîne de données avec ladite deuxième chaîne de données.

14. Système suivant l'une quelconque des revendications 10 à 13 comprenant en outre :
un moyen chez ledit deuxième participant pour recevoir lesdites plusieurs parties ;
un moyen pour reconstruire ladite demande de vérification d'authenticité à partir desdites plusieurs parties reçues, et
un moyen pour envoyer une réponse à ladite demande par ledit deuxième participant audit premier participant.

15. Système suivant la revendication 14 dans lequel :
le moyen pour générer ladite demande de vérification d'authenticité inclut un moyen pour former une combinaison logique de première et deuxième chaînes de données pour produire une troisième chaîne de données résultante, et
lesdits moyens pour séparer et envoyer séparément incluent un moyen pour envoyer lesdites première et troisième chaînes de données audit deuxième participant au dialogue par des canaux de communication différents les uns des autres.

16. Système suivant la revendication 15 dans lequel :
ledit moyen pour reconstruire ladite demande de vérification d'authenticité inclut un moyen pour former une combinaison logique desdites première et troisième chaînes de données reçues.

17. Système suivant la revendication 16 dans lequel :
ledit moyen pour former une combinaison logique utilisée pour générer ladite demande de vérification d'authenticité comprend un moyen pour exécuter un OU exclusif de ladite première chaîne de données avec ledit deuxième flux de données.

18. Système suivant la revendication 17 dans lequel :
ledit moyen pour former une combinaison logique utilisée pour reconstruire ladite demande de vérification d'authenticité comprend un moyen pour exécuter un OU exclusif de ladite première chaîne de données reçue avec ladite troisième chaîne de données reçue.

19. Système suivant l'une quelconque des revendications 14 à 18 comprenant en outre :
un moyen chez ledit premier participant pour recevoir la réponse à la demande envoyée par le deuxième participant, et
un moyen pour vérifier que ladite réponse reçue est correcte.

20. Support de stockage de programme informatique contenant un programme informatique, ledit programme informatique étant configuré pour exécuter le procédé suivant l'une quelconque des revendications 1 à 9.
